# EUROPÄISCHE PATENTSCHRIFT

(11) **EP 1 371 886 B1**
(45) Veröffentlichungstag und Bekanntmachung des Hinweises auf die Patenterteilung: **31.05.2006**
(21) Anmeldenummer: 03012987.8
(22) Anmeldetag: 07.06.2003
(51) Int. Cl.: F16K 1/12, F16K 31/06, F16K 37/00

(54) **Endschalter**
Limit switch
Interrupteur de fin de course

(30) Priorität: 14.06.2002 DE 10227549
(43) Veröffentlichungstag der Anmeldung: 17.12.2003
(73) Patentinhaber: müller co-ax ag, 74670 Forchtenberg (DE)
(72) Erfinder: Wagner, Ewald, 74653 Ingelfingen (DE)
(74) Vertreter: Patentanwälte Ruff, Wilhelm, Beier, Dauster & Partner

(56) Entgegenhaltungen:
- EP-A- 0 892 202
- WO-A-94/27069
- DE-A- 2 020 194
- US-A- 2 509 504
- US-A- 6 152 173

## Beschreibung

Die Erfindung geht aus von einem Linearventil, bei dem in einem Ventilgehäuse ein Ventilsitz und ein mit diesem zusammenwirkender Ventilschließkörper angeordnet ist. Zum Antrieb derartiger Ventile dienen beispielsweise Magnete, oder auch pneumatische oder hydraulische Antriebe. Es ist zwar möglich, den Steuerzustand des Ventils abzufragen, das heißt den Zustand des Antriebs des Ventils. Damit wird aber noch keine eindeutige Aussage über den tatsächlichen Zustand des Ventils geschaffen.

Es ist bereits ein Durchgangsventil mit Stellungsanzeiger bekannt (DE-A-2020194), bei dem der Ventilschließkörper im Endbereich seines Bewegungsweges einen durch die Wand des Ventilgehäuses hindurch ragenden Hebel verkippt, der in verkipptem Zustand einen elektrischen Schalter betätigt. Der elektrische Schalter schaltet zwischen zwei Lampen um.

Bei einem weiteren Linearventil (WO94/27069) ist in einem Flansch des Ventilschließkörpers ein Stift eingeschraubt, der durch eine abgedichtete Bohrung des Ventilgehäuses hindurch ragt und in seiner eigenen Längsrichtung verschoben werden kann. Er betätigt einen elektrischen Schalter.

Weiterhin ist es bekannt, zur Anzeige eines Ventils einen durch die Gehäusewandung ragenden Hebel zu verwenden, der in einer Membran schwenkbar gelagert ist (US-A 2509504).

Weiterhin bekannt ist ein Ventil (US-6152173), bei dem an der stromabgewandten Seite des Ventilschließkörpers ein Ende eines zweiarmigen verkippbaren Hebels angreift. Dieser Hebel ist federbeaufschlagt, damit er der Bewegung des Ventilschließkörpers folgen kann. Er ist mit einem Kugelabschnitt in einer Lagerung gelagert.

Der Erfindung liegt die Aufgabe zu Grunde, eine Möglichkeit zu schaffen, den tatsächlichen Schließzustand des Ventils anzeigen und/oder abfragen zu können.

Zur Lösung dieser Aufgabe schlägt die Erfindung ein Ventil mit den im Anspruch 1 genannten Merkmalen vor. Weiterbildungen der Erfindung sind Gegenstand von Unteransprüchen.
Durch die Erfindung wird es möglich, den tatsächlichen Schließzustand des Ventils, also die gewünschte Endstellung in Form eines Schließzustandes oder eines Öffnungszustandes, unabhängig davon erkennen zu können, ob das Ventil den Vorgaben des Antriebs gefolgt ist oder nicht. Es wird ebenfalls möglich, beispielsweise feststellen zu können, welche Zeit zwischen dem Steuerimpuls zum Schließen bzw.
Öffnen des Ventils und dem Erreichen des Schließzustandes beziehungsweise Öffnungszustandes verstreicht.

Bei der Anzeigeeinrichtung kann es sich um eine beliebig gestaltete Einrichtung handeln, mit deren Hilfe der Zustand angezeigt werden kann. Insbesondere kann es sich dabei um eine Einrichtung mit einem Endschalter handeln, der nicht nur zum Einschalten einer Anzeige, sondern beispielsweise auch zum Auslösen und/oder Beenden eines bestimmten dem gewünschten Zustand des Ventils zugeordneten Ereignisses ausgenutzt werden kann.

In Weiterbildung der Erfindung kann vorgesehen sein, dass die Anzeigeeinrichtung außerhalb des Ventilraumes, vorzugsweise außerhalb des Ventilgehäuses angeordnet ist. Die Einrichtung stört den Betrieb des Ventils nicht.

Erfindungsgemäß ist in Weiterbildung vorgesehen, dass die Anzeigeeinrichtung mit Hilfe eines durch die Wand des Ventilgehäuses hindurch greifenden Übertragungselements mechanisch betätigbar ist. Es kann dafür gesorgt werden, dass die Art, wie das Übertragungselement durch die Wand des Ventilgehäuses hindurch greift, in einer abgedichteten Weise erfolgt, so dass keinerlei Beeinträchtigungen der Funktion des Ventils zu befürchten sind.

Insbesondere kann vorgesehen sein, dass die Anzeigeeinrichtung ohne eine Unterbrechung des Betriebszustandes des Ventils austauschbar angeordnet und ausgebildet ist. Sollte einmal ein Schalter oder dergleichen ausfallen, so kann dieser ausgetauscht werden, ohne dass das Ventil oder die Installation, zu der das Ventil gehört, beispielsweise drucklos gemacht werden müsste.

Bei dem eingangs erwähnten Endschalter kann es sich um einen elektrischen Schalter, einen berührungsfrei arbeitenden Schalter, beispielsweise auch einen optisch betätigbaren Schalter handeln.

Zusätzlich oder alternativ hierzu kann vorgesehen sein, dass die Anzeigeeinrichtung eine optisch erkennbare Markierung aufweist. Hier kann im Notfall der Benutzer sogar ohne weitere Hilfsmittel ablesen, ob das Ventil geöffnet oder geschlossen ist.

Das Übertragungselement weist einen verkippbar gelagerten insbesondere zweiarmigen Hebel auf, der einerseits von dem Ventilschließkörper beaufschlagt wird und andererseits an dem Schalter angreift.

Zur Lagerung des Hebels ist ein mit diesem verbundenes Lagerelement zwischen Teilschalen eingespannt. Das Lagerelement ist eine Kugel, so dass die Bewegung des Übertragungselements ein Verschwenken um viele Achsen ist.

Es ist erfindungsgemäß vorgesehen, dass zwischen zwei Halbschalen ein Dichtelement vorgesehen ist, das das Lagerelement umgibt. Es dichtet sowohl das Lagerelement als auch die beiden Halbschalen gegeneinander und gegen das Gehäuse ab, in dem die Lagerung angeordnet ist.

Insbesondere kann vorgesehen sein, dass die Lagerung des Übertragungselements in einem Schraubeinsatz angeordnet ist.
Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Figur 1: einen Teilschnitt durch ein Ende eines Linearventils mit einer Anzeigeeinrichtung nach der Erfindung;
- Figur 2: in vergrößertem Maßstab das Anzeigeelement mit einem Übertragungselement;
- Figur 3: eine gegenüber Figur 2 abgeänderte Ausführungsform;
- Figur 4: eine weitere Ausführungsform der Anzeigeeinrichtung nach der Erfindung.

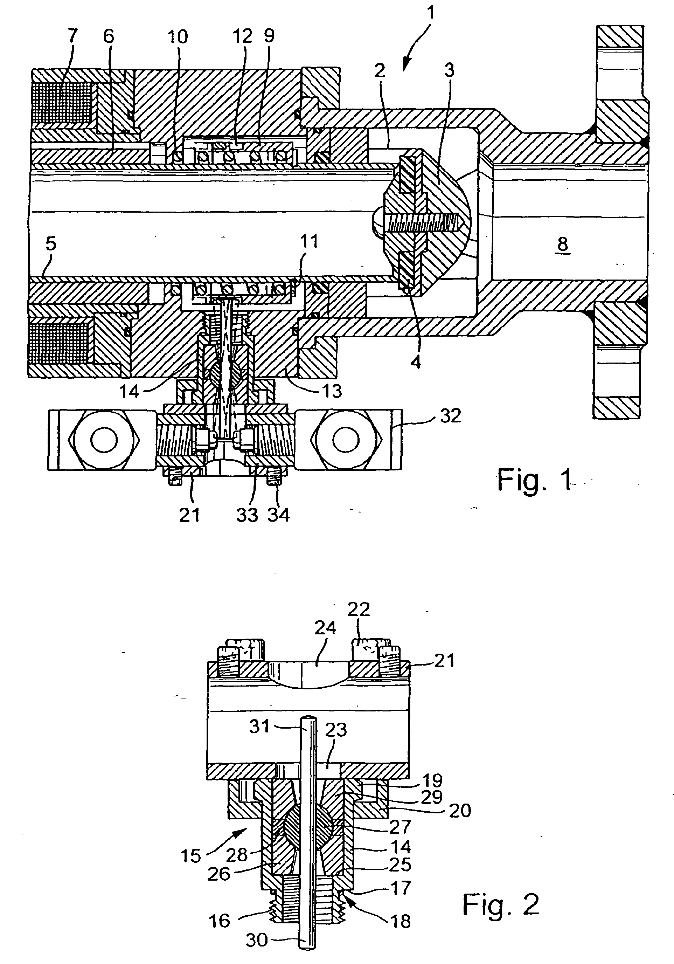

Figur 1 zeigt einen Axialschnitt durch ein Ende eines Linearventils, nämlich eines sogenannten Koaxialventils. Das Ventil enthält ein Gehäuse 1, das im Großen und Ganzen etwa zylindrisch ausgebildet ist. In dem Gehäuse 1 ist ein Ventilinnenraum 2 gebildet, in dem ein Ventilsitzkörper 3 untergebracht ist. Der Ventilsitzkörper 3 weist auf seiner einen in Figur 1 linken Seite einen Ventilsitz 4 auf. In dem Innenraum des Gehäuses ist ein Ventilschließkörper 5 in Form eines Steuerrohrs in seiner eigenen Längsrichtung verschiebbar angeordnet. Zum Antrieb bzw. zur Verschiebung des Ventilschließkörpers 5 dient ein Magnet 6, der mit dem Steuerrohr 5 verbunden ist, und eine Magnetspule 7, die gehäusefest angeordnet ist. Das dem Ventilsitz 4 zugeordnete Ende des Ventilschließkörpers 5 ruht im Schließzustand auf diesem Ventilsitz 4 auf. Durch Betätigen des Ventilantriebs kann das Steuerrohr 5 von dem Ventilsitz 5 abgehoben werden. Dann fließt das zu steuernde Medium durch das Innere des Steuerrohrs 5 an dem Ventilsitz 4 vorbei durch den rechts in Figur 1 zu sehenden Auslass 8. Dies ist die normale Funktion eines Koaxialventils.
An dem Ventilschließkörper 5 ist eine Hülse 9 angebracht, die von einer sich am Ventilgehäuse 1 abstützenden Druckfeder 10 gegen einen mit dem Ventilschließkörper 5 verbundenen Sprengring 11 beaufschlagt wird. Die Feder 10 ist in einem ringförmigen Zwischenraum zwischen der Hülse 9 und dem Ventilschließkörper 5 angeordnet. Es kann sich bei der Feder 10 sowohl um eine Feder handeln, die das Ventil in eine normalerweise geschlossene Stellung beaufschlagt, als auch um eine unabhängig von dem Ventil arbeitende Feder, deren einziger Zweck es ist, die Hülse 9 gegen den Sprengring 11 zu beaufschlagen.

Die Hülse 9 weist an ihrer Außenseite eine umlaufende Nut 12 auf, die dazu dient, die Bewegung des Schließkörpers 5 abzunehmen.

In der zylindrischen Mantelwand 13 des Ventilgehäuses 1 ist ein Schraubeinsatz 14 eingeschraubt, in dem ein Übertragungselement 15 gelagert ist. Das Übertragungselement 15 greift mit seinem in das Innere des Ventilgehäuse 1 gerichteten freien Ende in die umlaufende Ringnut 12 ein. Bei einer Bewegung der Hülse 9, verursacht durch eine Bewegung des Ventilschließkörpers 5, wird diese Bewegung mit Hilfe des Übertragungselements 15 durch die Wand 13 des Ventilgehäuses 1 nach außen übertragen.

Einzelheiten des Übertragungselements 15 und des Schraubeinsatzes 14 ergeben sich aus der Figur 2, auf die jetzt im folgenden Bezug genommen wird.

Der Schraubeinsatz weist eine abgestufte zylindrische Hülse auf. An dem in das Innere des Gehäuses 1 gerichteten Ende weist der Schraubeinsatz an seiner Außenseite ein Außengewinde 16 auf. Das Außengewinde 16 reicht nicht ganz bis zu einer Schulter 17, die an einer Durchmesservergrößerung des Schraubeinsatzes 14 gebildet ist. Im Bereich zwischen dem Außengewinde 16 und der Schulter 17 ist Platz für einen O-Ring 18. Der jetzt glatte außen zylindrische Teil des Schraubeinsatzes reicht bis zum Ende des Schraubeinsatzes, wo an der Außenseite eine umlaufende Rippe 19 gebildet ist.

Der Schraubeinsatz ist in das Innere eines Käfigs 20 eingesetzt, und zwar so weit, dass die Rippe 19 ein weiteres Durchschieben durch eine Öffnung des Käfigs 20 verhindert. In dem Käfig ist eine Aufnahmehülse 21 eingesetzt, die mit Hilfe von Zylinderkopfschrauben 22 gegen die zylindrische Hülse des Schraubeinsatzes 14 und gegen den Käfig 20 beaufschlagt wird. Die Aufnahmehülse 21 weist senkrecht zu ihrer Längsrichtung eine durch ihre Wand hindurch gehende Öffnung 23 und in Verlängerung zu dieser eine weitere durchgehende Öffnung 24 mit einem etwas größeren Durchmesser auf.

In dem Innenraum des Schraubeinsatzes 14 ist, auf einer Stufe 25 aufliegend, eine erste Teilschale 26 eingesetzt. Diese Teilschale 26 weist eine teilkugelförmige der Schulter 25 abgewandte Lagerfläche auf. In den Innenraum des Schraubeinsatzes wird ein kugelförmiges Lagerelement 27 eingeschoben, das gegen die erwähnte teilkugelförmige Lagerfläche der Teilschale 26 angelegt wird. Das Lagerelement 27 wird von einem O-Ring 28 umgeben. Anschließend wird von der gegenüberliegenden Seite des O-Rings eine zweite Halbschale 29 eingeschoben, die jetzt gegen den O-Ring 28 und die Kugel 27 zur Anlage kommt. Durch Festziehen der Aufnahmehülse 21 mit Hilfe der Schrauben 22 wird die zweite Halbschale 29 gegen das Lagerelement 27 beaufschlagt und festgedrückt. Die Abmessungen des Innenraums des Schraubeinsatzes 14, der Halbschalen 26 und 29 und des Lagerelements 27 sind so aufeinander abgestimmt, dass die Kugel 27 sich noch mit der erforderlichen Kraft verdrehen lässt, andererseits aber die gewünschte Dichtigkeit gegeben ist.

Das Lagerelement 27 ist auf eine Stange 30 aufgeschoben und mit dieser Stange 30 fest verbunden. Dies kann beispielsweise durch eine Klebung geschehen. Dadurch wird ein zweiarmiger Hebel gebildet, der um den Mittelpunkt des Lagerelements 27 verschwenkt werden kann, und zwar wegen der Kugelform um beliebig viele Achsen. Das in Figur 2 untere in das Innere des Ventilgehäuses 1 hinein gerichtete Ende dieser Stange 30 greift in die bereits erwähnte umlaufende Nut 12 ein. Dadurch bewegt sich das entgegengesetzte im Inneren der Aufnahmehülse 21 angeordnete Ende 31 des Übertragungselements in umgekehrter Richtung. Diese Bewegung des Endes 31 kann dazu ausgenutzt werden, entweder optisch wahrnehmbare Anzeigen oder elektrische Schalter zu betätigen.

In die Aufnahmehülse 21 kann, je nach der Art des Ventils, ein elektrischer Schalter eingeschoben werden. Hierzu wird nochmals auf die Figur 1 verwiesen. In der schematischen Darstellung der Figur 1 sind zwei Mikroschalter 32 in der Aufnahmehülse 21 angeordnet. Jeder Mikroschalter 32 ist zunächst in eine Adapterhülse 33 eingeschraubt, und zwar mit einem Außengewinde, das in ein entsprechendes Innengewinde der Adapterhülse 33 eingreift. Die Adapterhülsen 33 sind dann mit Hilfe von radial verlaufenden Gewindestiften 34 in ihrer axialen Position festgelegt. Das Ende 31 des Übertragungselements kann dann einen der beiden Mikroschalter 32 betätigen.

Der durch das Betätigen des Mikroschalters geöffnete oder geschlossene Stromkreis kann für die unterschiedlichsten Zwecke verwendet werden, beispielsweise als Sicherheitseinrichtung, als Anzeigeeinrichtung, als Messeinrichtung im Vergleich zu dem Zeitpunkt, zu dem der Magnet eingeschaltet wurde, oder in sonstiger beliebiger Weise.

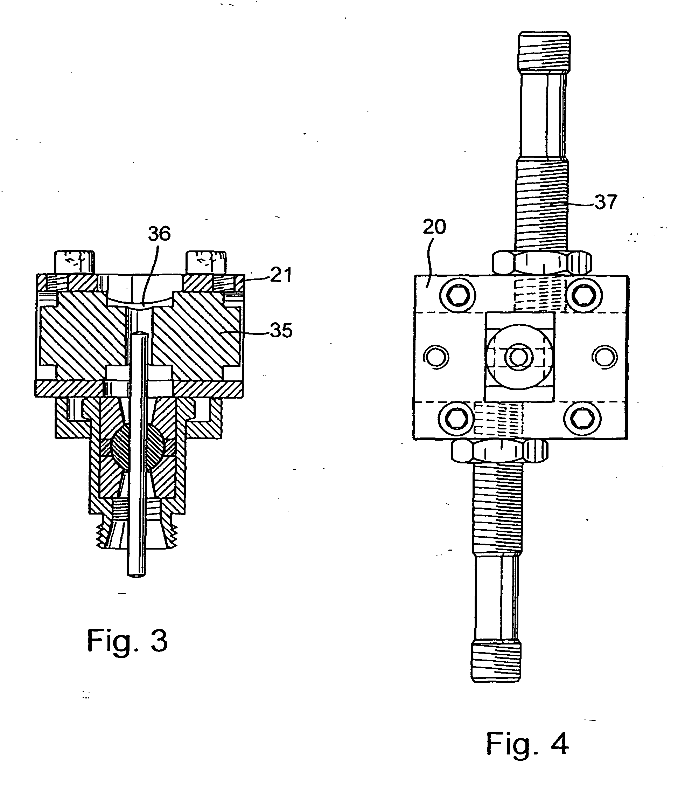

Die durch die Bewegung des Übertragungselements entstehende Verschiebung des Endes 31 der Stange 30 kann auch für andere Zwecke ausgenutzt werden. So zeigt beispielsweise die Figur 3 eine Anordnung, bei der in der Aufnahmehülse 21 ein Schieber 35 verschoben wird. Die Gewindestifte 34 fehlen hier also. Der Schieber 35 wird dadurch verschoben, dass das Ende 31 der Stange 30 in eine Querbohrung 36 eingreift. Die beiden axialen Enden des Schiebers 35 können eine optisch wahrnehmbare Markierung aufweisen, beispielsweise die eine Stirnfläche in Rot und die andere in Grün. Da die axiale Länge des Schiebers 35 etwas kleiner ist als die axiale Länge der Aufnahmehülse 21, ist dann immer nur eine Stirnfläche sichtbar, die dann die Markierung erkennen lässt.

Die Verschiebung eines solchen Schiebers 35 kann auch dazu ausgenutzt werden, berührungsfrei elektrische Schaltvorgänge auszulösen. Beispielsweise kann ein Schieber 35, der aus bestimmten Material besteht, dazu verwendet werden, induktive Schalter 37 zu betätigen, wie dies in Figur 4 angedeutet ist. Figur 4 zeigt eine Aufsicht auf eine Anordnung, wie sie in Figur 2 und 3 von der Seite gezeigt ist. Hier ist der Käfig oben zu sehen. Die Verschiebung des Schiebers 35 geschieht von links nach rechts beziehungsweise von rechts nach links.

Ein Schieber 35, wie er bei der Figur 3 dargestellt ist, könnte mit entsprechenden Querbohrungen auch dazu dienen, Lichtschranken zu öffnen und/oder zu schließen, um auf diese Weise eine andere Art eines berührungsfreien Schalters zu verwirklichen.

## Patentansprüche

1. Linearventil, mit
1.1 einem Ventilgehäuse (1),
1.2 einem in dem Ventilgehäuse (1) angeordneten Ventilsitz (4),
1.3 einem in dem Ventilgehäuse (1) angeordneten, mit dem Ventilsitz (4) zusammenwirkenden Ventilschließkörper (5), sowie mit
1.4 einer Einrichtung zum Anzeigen des Schließzustandes des Ventils, die
1.4.1 mechanisch durch den Ventilschließkörper (5) und
1.4.2 mit Hilfe eines durch die Wand (13) des Ventilgehäuses (1) hindurch greifenden Übertragungselements (15) betätigbar ist, das
1.4.3 einen verkippbar gelagerten insbesondere zweiarmigen Hebel aufweist,
1.4.4 zu dessen Lagerung ein mit diesem verbundenes als Kugel ausgebildetes Lagerelement (27) zwischen Teitschalen (26, 29) eingespannt ist, die
1.4.5 teilkugelförmige Lagerflächen aufweisen, **dadurch gekennzeichnet, dass**
1.5 zwischen den zwei Teilschalen (26, 29) ein das Lagerelement (27) umgebendes Dichtelement (28) vorgesehen ist.

2. Ventil nach Anspruch 1, bei dem die Einrichtung einen Endschalter aufweist.

3. Ventil nach Anspruch 1 oder 2, bei dem die Anzeigeeinrichtung außerhalb des Ventilinnenraums (2), vorzugsweise außerhalb des Ventilgehäuses (1) angeordnet ist.

4. Ventil nach einem der vorhergehenden Ansprüche, bei dem die Anzeigeeinrichtung ohne Unterbrechung des Betriebszustandes des Ventils austauschbar angeordnet ist.

5. Ventil nach einem der Ansprüche 2 bis 4, bei dem der Endschalter ein elektrischer Schalter (32) ist.

6. Ventil nach einem der Ansprüche 2 bis 5, bei dem der Endschalter ein berührungsfrei arbeitender Schalter ist.

7. Ventil nach einem der vorhergehenden Ansprüche, bei dem die Anzeigeeinrichtung eine optisch erkennbare Markierung aufweist.

8. Ventil nach einem der vorhergehenden Ansprüche, bei dem die Lagerung des Übertragungselements (15) in einem Schraubeinsatz (14) angeordnet ist.

## Claims

1. Linear valve, with
1.1 a valve casing (1),
1.2 a valve seat (4) located in the valve casing (1),
1.3 a valve insert (5) located in the valve casing (1), interacting with the valve seat (4), as well as with
1.4 a device for indicating the state of closure of the valve,
1.4.1 which can be mechanically actuated through the valve insert (5) and
1.4.2 with the help of a transmission element (15) that acts through the wall (13) of the valve casing (1), which exhibits
1.4.3 in particular a two-arm lever that is pivoted in a manner allowing it to be tilted,
1.4.4 for the support of which a support element (27) shaped as a sphere to which it is connected and held between the part shells (26, 29), which exhibit
1.4.5 partly spherical support surfaces
**characterized in that**
1.5 a sealing element (28) which surrounds the support element (27) is provided between the two part shells (26, 29).

2. Valve according to Claim 1, wherein the device exhibits a terminal switch.

3. Valve according to Claim 1 or 2, wherein the indicating device is located outside the valve's interior cavity (2), preferably outside the valve casing (1).

4. Valve according to one of the preceding claims, wherein the indicating device is located such that it can be exchanged without interrupting the operating state of the valve.

5. Valve according to one of Claims 2 to 4, wherein the terminal switch is an electric switch (32).

6. Valve according to one of Claims 2 to 5, wherein the terminal switch is a non-contacting switch.

7. Valve according to one of the preceding claims, wherein the indicating device exhibits an optically visible marking.

8. Valve according to one of the preceding claims, wherein the support of the transmission element (15) is located in a screw insert (14).

## Revendications

1. Soupape linéaire, comprenant
1.1 une cage de soupape (1),
1.2 un siège de soupape (4) disposé dans la cage de soupape (1),
1.2 un corps de fermeture de soupape (5) disposé dans la cage de
soupape (1) et interagissant avec le siège de soupape (4), ainsi qu' 1.4 un dispositif pour indiquer l'état de fermeture de la soupape, ce dispositif étant
1.4.1 actionnable mécaniquement au moyen du corps de fermeture de soupape (5) et
1.4.2 à l'aide d'un élément de transmission (15) agissant à travers la paroi (13) de la cage de soupape (1), cet élément de transmission
1.4.3 présentant un levier logé de manière à pouvoir être basculé, en particulier un levier à deux bras,
1.4.4 pour le logement duquel un élément de palier (27) exécuté en forme de bille et raccordé à celui-ci est contraint entre des coques partielles (26, 29) qui
1.4.5 présentent des surfaces d'appui de forme partiellement sphériques,
**caractérisée en ce qu'**
1.5.1 un élément d'étanchéité (28) entourant l'élément de palier (27) est prévu entre les coques partielles (26, 29).

2. Soupape selon la revendication 1, dans laquelle le dispositif présente un commutateur de fin de course.

3. Soupape selon la revendication 1 ou 2, dans laquelle le dispositif indicateur est disposé à l'extérieur de l'espace intérieur de soupape (2), de préférence à l'extérieur de la cage de soupape (1).

4. Soupape selon l'une quelconque des revendications précédentes, dans laquelle le dispositif indicateur est disposé de manière interchangeable sans interruption de l'état de marche de la soupape.

5. Soupape selon l'une quelconque des revendications 2 à 4, dans laquelle le commutateur de fin de course est un commutateur électrique (32).

6. Soupape selon l'une quelconque des revendications 2 à 5, dans laquelle le commutateur de fin de course est un commutateur fonctionnant sans contact.

7. Soupape selon l'une quelconque des revendications précédentes, dans laquelle le dispositif indicateur présente une marque visuelle.

8. Soupape selon l'une quelconque des revendications précédentes, dans laquelle le palier de l'élément de transmission (15) est disposé dans un insert fileté (14).
